# EUROPEAN PATENT APPLICATION

(11) **EP 1 526 520 A2**
(43) Date of publication of application: **27.04.2005**
(21) Application number: 04024934.4
(22) Date of filing: 20.10.2004
(51) Int. Cl.: G11B 7/135

(54) **Optical pickup apparatus and optical recording medium playback apparatus**

(30) Priority: 20.10.2003 JP 2003359897
(71) Applicant: Pioneer Corporation, Tokyo 153-8654 (JP)
(72) Inventor: Ogasawara, Masakazu, c/o Pioneer Corporation, Tsurugashima-shi Saitama 350-2288 (JP)
(74) Representative: HOFFMANN - EITLE

(57) **Abstract**

An optical pickup apparatus includes a light source (11) that produces and emits light beams on an optical recording medium (3) having a plurality of recording layers; a plurality of switchable objective lenses (16a, 16b) varied in design value of a cover layer thickness; a wavefront aberration correcting unit (13) that corrects wavefront aberration occurring when the light beams are gathered in a predetermined range from the design value of the cover layer thickness of one of the objective lenses (16a, 16b); a detecting unit (23) that detects a light beam reflected from the optical recording medium (3); and a controlling unit (20) that controls switching of the objective lenses (16a, 16b) in accordance with the cover layer thickness of a selected one of the recording layers and that controls the wavefront aberration correcting unit (13).

## Description

### BACKGROUND OF THE INVENTION

### 1) Field of the Invention

The present invention relates to an optical pickup apparatus and an optical recording medium playback apparatus.

### 2) Description of the Related Art

A conventional optical pickup apparatus has been disclosed in Japanese Patent Application Laid-Open Publication No. 2001-176117. In this optical pickup apparatus, a plurality of objective lenses varied in focal length are provided for applying servo laser light to a guide track layer formed on an information recording medium and, based on the resultant signal, one of the objective lenses is driven in a focus direction and a tracking direction to apply recording/playback laser light to a desired one of the recording layers. This optical pickup apparatus applies recording and playback laser light to varying positions while making the servo laser light gathered on the guide track layer even with the objective lens being switched.

However, the conventional optical pickup apparatus is targeted to optical recording media, such as DVDs (Digital Versatile Discs or Digital Video Discs), for playback of information using an objective lens with a numerical aperture of approximately 0.6. In that case, however, in the optical recording medium including the recording layers, when the position of the recording layer on which light beams are gathered is changed, information can be played back without correction of wavefront aberration of the light beams.

However, the conventional optical pickup apparatus cannot support playback of the information from an optical recording medium including many recording layers for achieving a high recording density. To playback such an optical recording medium for achieving a high recording density, an objective lens with a larger numerical aperture is required. For example, with an objective lens having a larger numerical aperture, when the recording layer on which the light beams are gathered is switched, wavefront aberration occurring on each recording layer is too large to be neglected. Therefore, in the conventional technology without a wavefront aberration correcting unit for playback of the information of the optical recording medium including the recording layers for achieving a high recording density, the maximum number of objective lenses required corresponds to the number of recording layers included in the optical recording medium. Therefore, for an optical recording medium including 100 recording layers, for example, 100 objective lenses are required, thereby making it extremely difficult to configure an optical pickup apparatus.

### SUMMARY OF THE INVENTION

It is an object of the present invention to solve at least the problems in the conventional technology.

An optical pickup apparatus according to an aspect of the present invention includes a light source that produces and emits light beams on an optical recording medium having a plurality of recording layers; a plurality of switchable objective lenses varied in design value of a cover layer thickness; a wavefront aberration correcting unit that corrects wavefront aberration occurring when the light beams are gathered in a predetermined range from the design value of the cover layer thickness of one of the objective lenses; a detecting unit that detects a light beam reflected from the optical recording medium; and a controlling unit that controls switching of the objective lenses in accordance with the cover layer thickness of a selected one of the recording layers and that controls the wavefront aberration correcting unit.

An optical pickup apparatus according to another aspect of the present invention includes a plurality of switchable optical systems each including a light source that produces light beams to be applied to an optical recording medium having a plurality of recording layers; an objective lens; a wavefront aberration correcting unit that corrects wavefront aberration occurring when the light beams are gathered in a predetermined range from a design value of a cover layer thickness of the objective lens; and a detecting unit that detects a light beam reflected from the optical recording medium; and a controlling unit that controls switching of the objective lenses of the switchable optical system in accordance with the cover layer thickness of a selected one of the recording layers and that controls the wavefront aberration correcting units of the switchable optical system.

An optical recording medium playback apparatus according to still another aspect of the present invention includes the above optical pickup apparatus; and a playback processing unit that reproduces a detection signal output from the detecting unit of the optical pickup apparatus.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a schematic of an optical recording medium playback device according to an embodiment of the present invention;
Fig. 2 is a schematic diagram showing a range for allowing correction of wavefront aberration of an objective lens;
Fig. 3 is a perspective of a second wavefront aberration correcting unit as an electro-optical element panel;
Fig. 4 is a flowchart of a process performed by an aberration -correcting-element controlling unit;
Fig. 5 is a diagram schematically showing a use range of a plurality of objective lenses according to the present invention;
Fig. 6 is a diagram schematic of an optical recording medium playback apparatus according to a first embodiment of the present invention;
Fig. 7 is a diagram schematically showing a use range of a plurality of objective lenses in the optical recording medium playback apparatus shown in Fig. 6;
Fig. 8 is a schematic for showing the state of an objective lens for use at the time of playing back a Blu-ray disc;
Fig. 9 is a schematic of an optical recording medium playback apparatus according to an exemplary modification of the optical recording medium playback apparatus shown in Fig. 6;
Fig. 10 is a schematic of an optical recording medium playback apparatus according to a second embodiment of the present invention; and
Fig. 11 is a schematic for showing the state of an objective lens for use at the time of playing back a DVD.

### DETAILED DESCRIPTION

Exemplary embodiments of an optical pickup apparatus and an optical recording medium playback apparatus according to the present invention are described in detail below with reference to accompanying drawings.

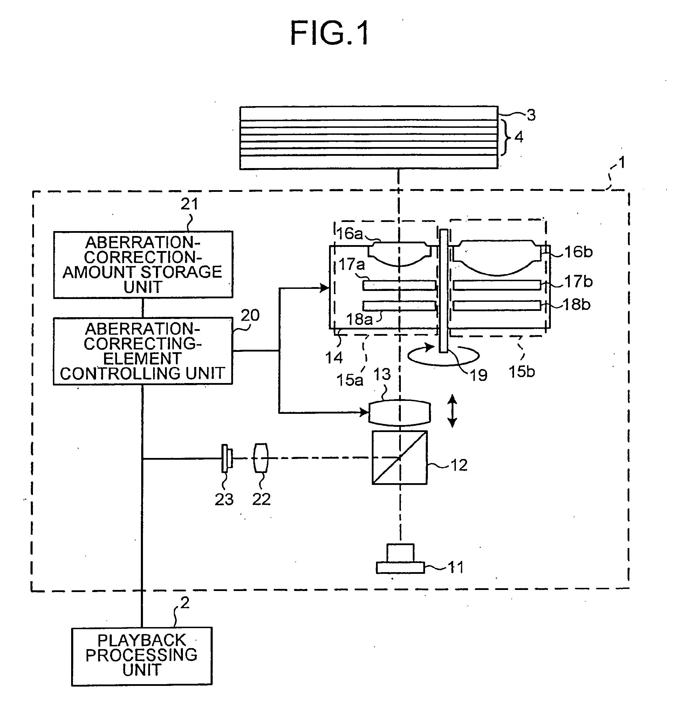

Fig. 1 is a schematic of an optical recording medium playback apparatus according to an embodiment of the present invention. This optical recording medium playback apparatus records or plays back an optical recording medium 3 having a plurality of recording layers 4 with a high recording density by selecting one of a plurality of objective lenses 16a and 16b varied in focal length according to a cover layer thickness of a recording layer on which recording or playback is performed. As shown in the drawing, the playback apparatus includes an optical pickup device 1 for applying light beams to the optical recording medium 3 while correcting wavefront aberration (mainly, spherical aberration) that occurs and, based on reflected light, outputting a detection signal corresponding to recording information on the optical recording medium 3. The playback apparatus also includes a playback processing unit 2 for playing back the recording information based on the detection signal for output as a playback signal. The cover layer thickness is a distance in a depth direction of the optical recording medium 3 from the surface of the optical recording medium 3 on the side where the objective lenses 16a and 16b are located to the relevant recording layer 4.

The optical pickup device 1 includes a light source 11 that produces light beams for use at the time of playing back the recording information recorded on the optical recording medium 3 having the recording layers 4; a beam splitter 12 that lets the light beams produced from the light source 11 pass through the objective lens 16a (16b) and also branching the reflected light from the optical recording medium 3 to a detector 23 side; a first wavefront aberration correcting unit 13 that corrects wavefront aberration of the light beams produced from the light source 11; an objective lens holder 14 that holds the plurality of objective lenses 16 varied in focal length and can perform switching so that the optical axis of the light beams applied from the light source 11 to the optical recording medium coincides with the optical axis of any one of the objective lenses 16; an aberration-correcting-element controlling unit 20 serving as a controlling unit that switches the objective lens holder 14 and controls, for correction of wavefront aberration, the first wavefront aberration correcting unit 13 and a second wavefront aberration correcting unit 18 provided to the objective lens holder 14; an aberration-correction-amount storage unit 21 that stores, for each recording layer 4, a correction amount of the first wavefront aberration correcting unit 13 and a correction amount of the second wavefront aberration correcting unit 18; a light-gathering lens 22 for gathering the light beams reflected by the beam splitter 12 from the optical recording medium 3 to a detector 23; and the detector 23, which is a detecting unit that converts the received light beams to a detection signal.

The first wavefront aberration correcting unit 13 is a lens that changes a position relative to the objective lens 16 or a position relative to the light source 11 in an optical axis direction to change the exitance or convergence of an incident luminous flux of the light beams to the objective lens 16, thereby correcting low-order wavefront aberration occurring due to the cover layer thickness of the disc. The first wavefront aberration correcting unit 13 can be a collimator lens, which, makes the light beams produced from the light source 11 parallel to each other and also moves the resultant parallel light in the optical axis direction to correct wavefront aberration of the light beams, and an expander lens, which includes two or more lenses to correct wavefront aberration of the light beams by changing the position of at least one of these lenses in the optical axis direction. This first wavefront aberration correcting unit 13 includes an actuator, not shown, and is configured to be moved by the aberration-correcting-element-controlling unit 20 in the optical axis direction of the light beams.

The objective lens holder 14 is configured to hold a plurality of objective lens units 15 each including a set of the objective lens 16, a 1/4 wavelength plate 17, and the second wavefront aberration correcting unit 18. The objective lenses 16 included in the objective lens units 15 are varied in focal length. Here, in one objective lens unit 15, the objective lens 16 and the second wavefront aberration correcting unit 18 are disposed in alignment so that their optical axes coincide with each other and are fixed to the objective lens holder 14. As shown in Fig. 1, two objective lens units 15a and 15b are fixed to the objective lens holder 14. The objective lens holder 14 is supported at a point near its center by a shaft 19 penetrating therethrough, which is further supported by an actuator, not shown, and the objective lens holder 14 is rotatable about this shaft 19. Thus, the objective lens 16 can be switched so that the axis of the light beams produced from the light source 11 coincides with the optical axis of any one of the objective lens units 15. This objective lens holder 14 is configured so as to be kept in balance when supporting the objective lens units 15.

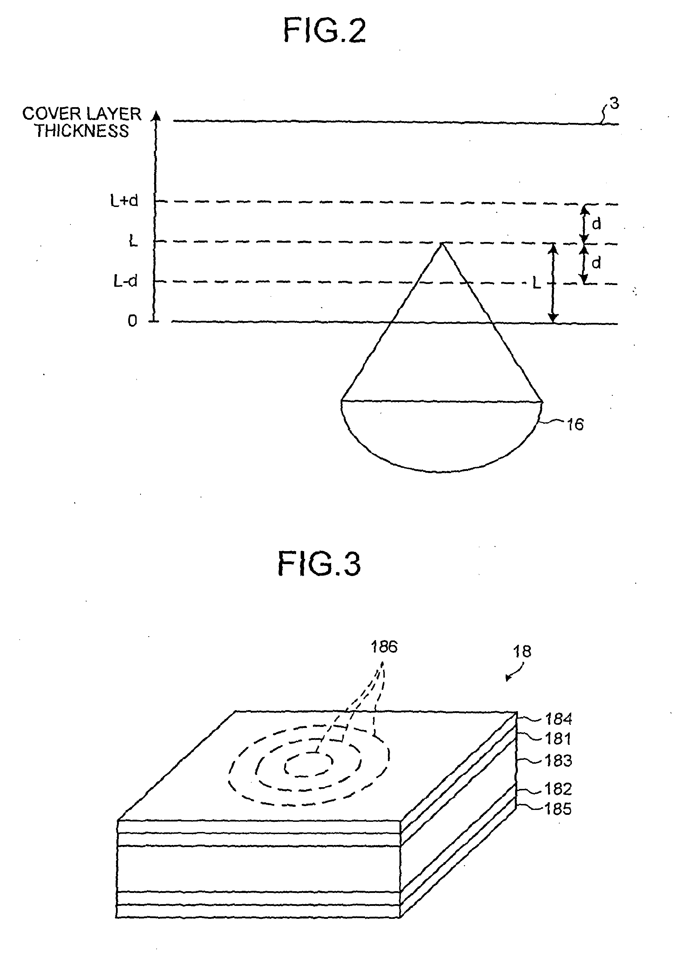

The objective lens holder 14 is provided with the plurality of objective lenses 16 varied in design value of the cover layer thickness to gather the light beams on the recording layer 4 at any depth in the optical recording medium 3. As shown in Fig. 1, the objective lens holder 14 is provided with two objective lenses 16a and 16b. In general, as a result of correction of wavefront aberration of the light beams obtained by the first and second wavefront aberration correcting units 13 and 18, respectively, if an RMS (Root Mean Square) of wavelength aberration of the light beams does not exceed 70 mλ, it is thought that these light beams can be used for recording and playback of the optical recording medium 3. Therefore, as shown in Fig. 2, if the objective lens 16 is designed to have a focal length equal to a cover layer thickness L, light beams can be satisfactorily gathered on the recording layer 4 whose cover layer thickness is within a range of L-d to L+d. Therefore, for playback of the optical recording medium 3 having the recording layers 4, objective lenses 16 to be selected as those to be held by the objective lens holder 14 are varied in design value of the cover layer thickness to gather the light beams satisfactorily from a recording layer 4 of the lowest cover layer thickness to a recording layer 4 of the highest cover layer thickness. However, for the optical recording medium 3 having recording layers 4 of a high cover layer thickness, a short focal length might not allow a sufficient working distance, thereby making the objective lenses 16 and the optical recording medium 3 in contact with each other. Therefore, the objective lenses 16 have to be designed in consideration of not only the cover layer thickness but also the focal length.

The 1/4 wavelength plate 17 is disposed so as to allow the beam splitter 12 to split the light beam coming from the light source 11 and the light beam reflected on the optical recording medium 3. As shown in Fig. 1, there are two 1/4 wavelength plates 17a and 17b.

The second wavefront aberration correcting unit 18 is configured to have an electro-optical element, such as a liquid crystal, that produces an electro-optical effect with an electric field so as to correct high-order wavefront aberration that remains after the correction by the first wavefront aberration correcting unit 13. As shown in Fig. 1, there are two second wavefront aberration correcting units 18a and 18b.

Fig. 3 is a perspective view schematically showing the structure of the second wavefront aberration correcting unit 18 as an electro-optical element panel. The second wavefront aberration correcting unit 18 is basically configured such that a first electrode layer 181 and a second electrode layer 182 have an electro-optical element 183 sealed therebetween, and are further sandwiched between transparent glass boards 184 and 185. When a liquid crystal element is used as the electro-optical element, the second wavefront aberration correcting unit 18 is implemented as a liquid crystal panel. The liquid crystal element is changed in orientation by an applied voltage, which causes a change in its index of refraction. Therefore, light passing through the liquid crystal panel with a voltage being applied to a certain area forms a transmission wavefront with a predetermined phase difference in that area. This phase difference can be controlled depending on the magnitude of the applied voltage. Therefore, at least one of the first and second electrode layers 181 and 182 is formed with an electrode 186 having an arbitrary shape for correcting wavefront aberration. Normally, the electrode 186 can be formed as concentric circles corresponding to an aberration distribution shape of high-order wavefront aberration that remains after the correction by the first wavefront aberration correcting unit 13. By arbitrarily controlling the magnitude of the voltage to be applied to the electrode 186, an arbitrary transmission wavefront can be formed having an arbitrary phase difference in an arbitrary shape.

The aberration-correcting-element controlling unit 20 switches the objective lens based on the cover layer thickness of the recording layer 4 for playback of the optical recording medium 3. The aberration-correcting-element controlling unit 20 also performs wavefront aberration correction on the first and second wavefront aberration correcting units and 13 and 18 based on the values stored in the aberration-correction-amount storage unit 21. The wavefront aberration correction is defined by the cover layer thickness of the recording layer 4.

The aberration-correction-amount storage unit 21 stores correction amounts calculated in advance for the respective recording layers 4 of the predetermined cover layer thickness. These correction amounts include a driving position in the optical axis direction as a correction amount for the first wavefront aberration correcting unit 13. The aberration-correction-amount storage unit 21 also stores an applied voltage as a correction amount for the second wavefront aberration correcting unit 18. The correction amounts of wavefront aberration of the first and second wavefront aberration correcting units 13 and 18 stored in this aberration-correction-amount storage unit 21 can be calculated by using a known scheme.

For example, when the first wavefront aberration correcting unit 13 is implemented by an expander lens and the second wavefront aberration correcting unit 18 is implemented by a liquid crystal panel, the expander lens is oscillated at a predetermined frequency along the optical axis. At a position where the magnitude of an envelope signal of an RF read signal obtained by the detector 23 reaches a maximum, the actuator provided to the expander lens is driven in the optical axis direction to fix the expander lens. The electrode 186 formed on the first and second electrode layers 181 and 182 of the second wavefront aberration correcting unit 18 is applied with a voltage oscillating with a predetermined amplitude and a frequency centering at a predetermined voltage. An applied voltage that maximizes the magnitude of the envelope signal of the RF read signal obtained by the detector 23 is fixed as a voltage applied to the electrode 186 of the first and second electrode layers 181 and 182. Through such a scheme, the correction amounts of the first and second wavefront aberration correcting units 13 and 18 are determined. According to these correction amounts, the light beams to be gathered on the relevant recording layer 4 are corrected by the first and second wavefront aberration correcting units 13 and 18, respectively.

As shown in Fig. 1, the driving position of the first wavefront aberration correcting unit 13 and the applied voltage of the second wavefront aberration correcting unit 18 are stored in the aberration-correction-amount storage unit 21 for each recording layer 4. Alternatively, the aberration-correction-amount storage unit 21 may not be provided, and the correction described above may be performed every time any of the recording layers 4 is specified.

The playback processing unit 2 has a function of playing back the information recorded on the optical recording medium 3 based on the detection signal output from the detector 23 to reproduce a playback signal for output to a playback unit, not shown, such as an external loudspeaker or a display.

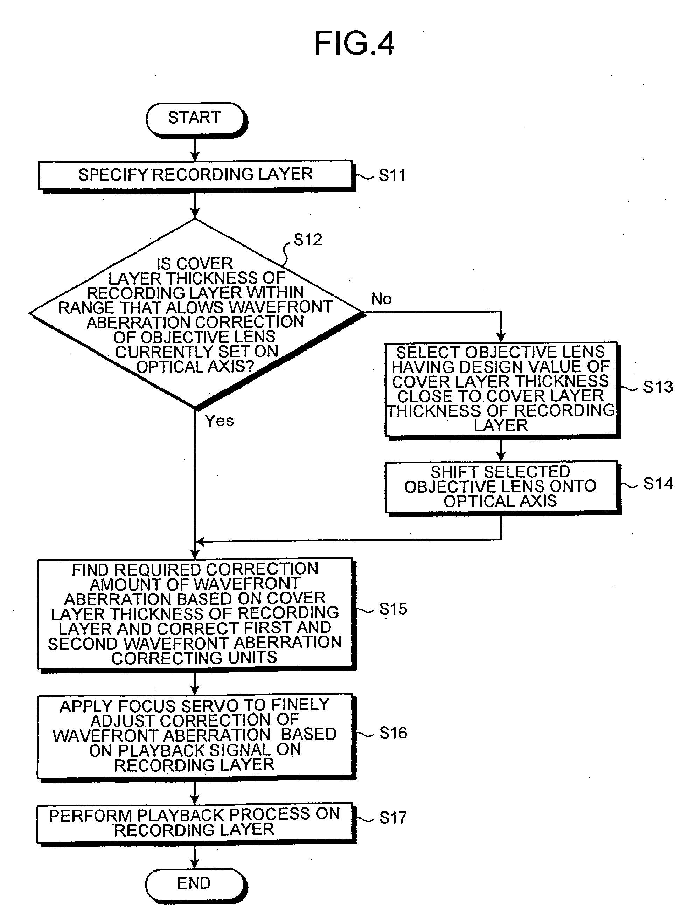

A control process performed by the aberration-correcting-element controlling unit 20 is described with reference to a flowchart shown in Fig. 4. First, when any of the recording layers 4 is specified for playback (step S11), the aberration-correcting element controlling unit 20 determines whether the position (that is, the cover layer thickness) of the specified recording layer 4 is beyond a range that allows correction of wavefront aberration of the objective lens 16 currently set on the optical axis (that is, a range that allows light-gathering) (step S12). If the position of the specified recording layer 4 is within the range that allows correction of wavefront aberration of the currently-set objective lens 16 (Yes at step S12), this objective lens 16 is selected as an objective lens having a design value of the cover layer thickness closest to that of the specified recording layer 4.

If the position of the specified recording layer 4 is not within the range that allows correction of wavefront aberration of the currently-set objective lens 16 (No at step S12), an objective lens 16 having a design value of the cover layer thickness closest to the cover layer thickness of the specified recording layer 4 is found (step S13). The aberration-correcting-element controlling unit 20 then switches the currently-set objective lens to the found objective lens 16 (step S14).

Thereafter or after step S12, the aberration-correcting-element controlling unit 20 finds from the aberration-correction-amount storage unit 21 a required correction amount of wavefront aberration based on the cover layer thickness at the position of the specified recording layer 4, and then corrects the first and second wavefront aberration correcting units 13 and 18, respectively, to perform correction by the found correction amount of wavefront aberration (step S15).

Next, focus servo is applied to the relevant recording layer 4 to finely adjust correction of wavefront aberration based on the playback signal on the target layer (step S16). Then, a playback process is performed on the recording layer 4 (step S17), thereby ending the control process.

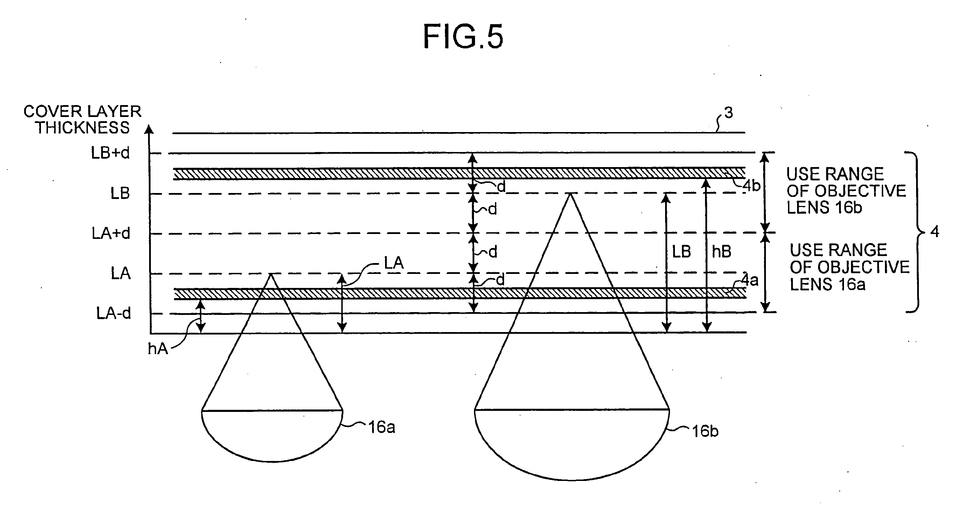

As shown in Fig. 5, two objective lenses 16a and 16b having the same numerical aperture with respective design values of the cover layer thickness of LA and LB (where LA<LB) are held by the objective lens holder 14. When a thickness measured with the design values of the cover layer thickness of the objective lenses 16a and 16b being taken as a reference, d, it is assumed that a range allowing the objective lens 16a to perform correction of wavefront aberration (that is, a range that allows light gathering) is LA-d to LA+d, and a range allowing the objective lens 16b to perform correction of wavefront aberration is LA+d to LB+d (where LA+d=LB-d). When a recording layer 4a at a position of a cover layer thickness hA (<LA) is specified, for example, the cover layer thickness of this recording layer 4a is close to the design value LA of the cover layer thickness of the objective lens 16a, and therefore the objective lens 16a is selected. Then, the aberration-correcting-element controlling unit 20 performs correction of wavefront aberration for hA-LA.

Also, when a recording layer 4b at a position of a cover layer thickness hB (>LB) is specified, for example, the cover layer thickness of this recording layer 4b is close to the design value LB of the cover layer thickness of the objective lens 16b, and therefore the objective lens 16b is selected. Then, the aberration-correcting-element controlling unit 20 performs correction of wavefront aberration for hB-LB.

Thus, the optical pickup device 1 is configured to include the objective lenses 16a and 16b varied in design value of the cover layer thickness, the first wavefront aberration correcting unit 13 as a collimator lens, and the second wavefront aberration correcting unit 18 using an electro-optical element, which makes it possible to move the light-gathering position of the light beams within a predetermined range. As a result, an effect can be achieved in which, even when an objective lens 16 having a numerical aperture larger than the numerical aperture of the objective lens 16 for use in DVD playback, for example, the light beams with wavefront aberration being corrected can be gathered on an arbitrary recording layer 4 of the recoding layers 4 included in the optical recording medium 3.

Also provided are the first wavefront aberration correcting unit 13 formed of lenses for correcting wavefront aberration by changing the exitance or convergence of an incident luminous flux of the light beams to the objective lenses 16a and 16b, the electro-optical element with its index of refraction being changed depending on the electric field, and the electrode 186 for changing the index of refraction of the electro-optical element to correct wavefront aberration of the light beams passing through the objective lens. Further provided is the second wavefront aberration correcting unit 18 disposed at the light source 11 side of the objective lenses 16a and 16b. With this configuration, an effect can be achieved in which the light beams with wavefront aberration being corrected can be gathered on any of the recording layers 4 of the optical recording medium 3. Also, it is possible to widen the range allowing the light beams to be gathered by a single objective lens 16. As a result, the number of objective lenses 16 can be fewer than the number of recording layers 4 of the optical recording medium 3.

Furthermore, the aberration-correction-amount storage unit 21 is provided for storing, for each cover layer thickness of the recording layer 4, the correction amounts for use in the first and second wavefront aberration correcting units 13 and 18, respectively, when the light beams are gathered on the recording layer 4 of the optical recording medium 3. Therefore, the correction amounts for the first and second wavefront aberration correcting units 13 and 18, respectively, do not have to be calculated to corresponding to the cover layer thickness of the recording layer 4 every time the recording layer 4 is selected, thereby achieving an effect in which a time required for wavefront aberration can be reduced.

Also, for an optical recording medium playback apparatus for playing back an optical recording medium 3 having the same recording density in every recording layer 4 having any cover layer thickness, it is desirable that the objective lenses 16 held by the objective lens holder 14 have the same numerical aperture. Also, for an optical recording medium playback apparatus for playing back an optical recording medium 3 having a plurality of recording layers 4 varied in degree of recording density depending on the cover layer thickness, it is desirable to provide the objective lenses 16 having a numerical aperture selected depending on the cover layer thickness of the recording layer 4 and the recording density. Furthermore, in the description above, two objective lenses are exemplarily provided, but three or more objective lenses 16 may be provided that are varied in design value or the cover layer thickness.

Furthermore, the shape of the optical recording medium 3 to be played back by this optical recording medium playback apparatus is not restricted to a disc-like shape, as is the case with CDs (Compact Discs) and DVDs, but may be arbitrary as long as the optical recording medium 3 has a large numerical aperture and a plurality of recording layers 4 as compared with existing optical recording mediums, such as a DVD.

A concrete example of the optical recording medium playback apparatus according to the present invention is described below as a first ebmodiment. Components identical to those of the optical recording playback apparatus described above are provided with the same reference numerals and are not described in detail herein.

An optical recording medium playback apparatus according to the fist embodiment is capable of not only an optical recording medium having a disc structure including a plurality of recording layers, but also a Blu-ray disc is described. Here, exemplarily shown as an optical recording medium having the recording layers is a multi-layered optical disc including, for example, 100 recording layers and having a shape identical to a Blu-ray disc for recording and playback with both a numerical aperture of an objective lens and a wavelength of the light beam identical to those of the Blu-ray disc.

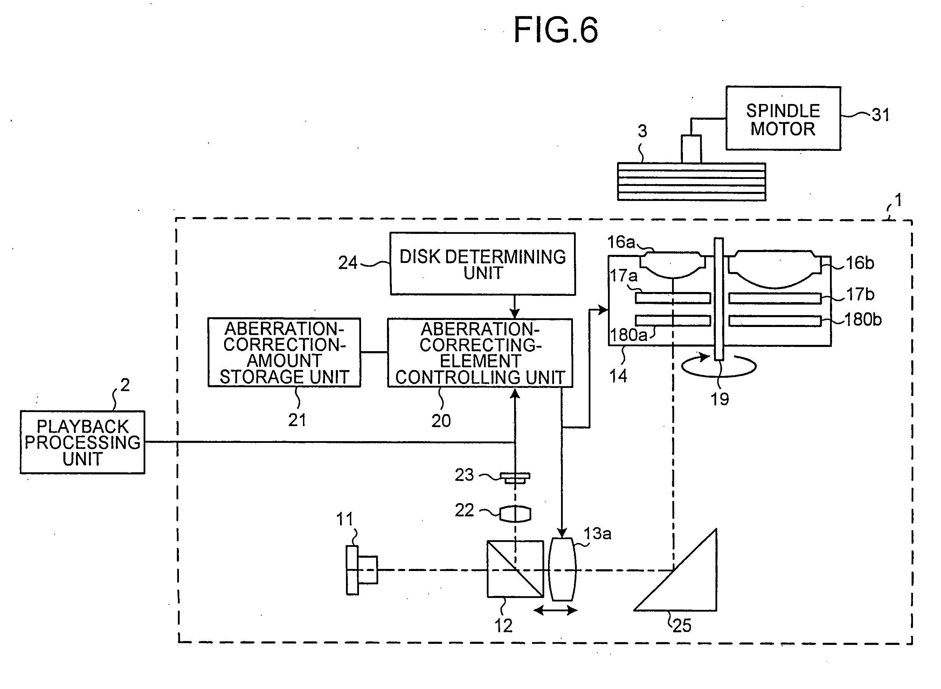

Fig. 6 is a schematic of the optical recording medium playback apparatus according to the first embodiment. The optical recording medium playback apparatus according to the first embodiment further includes, in addition to the components shown in Fig. 1, a disc determining unit 24 that determines the type of a disc inserted in an optical disc drive not shown and outputs, as information indicative of the type of the inserted disc, the determination result to the aberration-correcting element controlling unit 20, and a spindle motor 31 for rotating the disc inserted in the optical disc drive at a predetermined number of rotations. Also, in Fig. 6, an upright prism 25 is inserted for bending an optical path at a right angle for each set of the first wavefront aberration correcting unit 13 and the objective lens holder 14 to change the orientation of a light beam produced from the light source 11 by 90 degrees from the orientation of a light beam passing through the objective lens 16.

Thus, in the first embodiment, two objective lenses 16a and 16b are provided, a semiconductor laser producing a blue-violet laser having a wavelength of 405 nanometers is used as the light source 11, a polarizing beam splitter 12a is used as the beam splitter 12, a collimator lens 13a is used as the first wavefront aberration correcting unit 13, liquid crystal panels 180a and 180b are used as the second wavefront aberration correcting units 18.

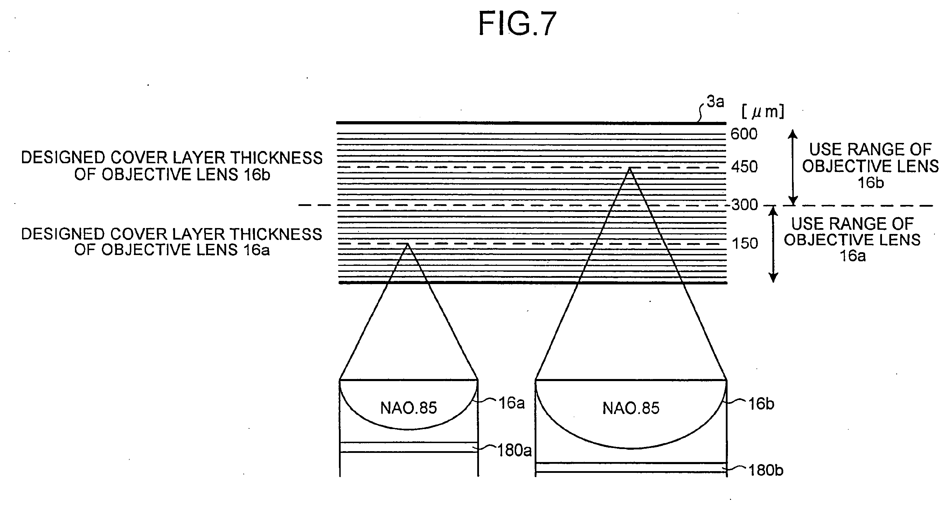

It is assumed that the numerical aperture of each objective lens 16 is 0.85. Fig. 7 is a diagram schematically showing a use range of each objective lens 16. The objective lens 16a is designed to have a cover layer thickness of 150 micrometers, while the objective lens 16b is designed to have a cover layer thickness of 450 micrometers. In the objective lenses 16a and 16b having the numerical aperture of 0.85, the cover layer thickness whose RMS value of wavefront aberration in the collimator lens 13a and the liquid crystal panels 180a and 180b after correction of wavefront aberration is 70 mλ is ±150 micrometers from the design value of the cover layer thickness of the relevant objective lens 16. Therefore, for playback of a recording layer 4 having a cover layer thickness in a range of 0 to 300 micrometers, the objective lens 16a is used. For playback of a recording layer 4 having a cover layer thickness in a range of 300 to 600 micrometers, the objective lens 16b is used.

When a multi-layered optical disc 3a is inserted in the optical disc drive, the disc determining unit 24 determines the type of the inserted disc, and then outputs to the aberration-correcting-element controlling unit 20 type information indicating that the multi-layered optical disc 3a has been inserted in the optical disc drive. When the position of the recording layer 4 to be played back in the multi-layered optical disc 3a is specified, the aberration-correcting-element controlling unit 20 selects, as described above, the objective lens 16a or 16b corresponding to the cover layer thickness of that recording layer 4, and further determines the position of the collimator lens 13a and the voltage applied to the liquid crystal panel 180a or 180b corresponding to the cover layer thickness of the recording layer 4, thereby controlling the collimator lens 13a and the liquid crystal panel 180a or 180b. For example, when the cover layer thickness of the selected recording layer 4 is 200 micrometers, the objective lens 16a is selected, and correction of wavefront aberration is performed for +50 micrometers. Also, when the cover layer thickness is 400 micrometers, the objective lens 16b is selected, and wavefront aberration is corrected for -50 micrometers.

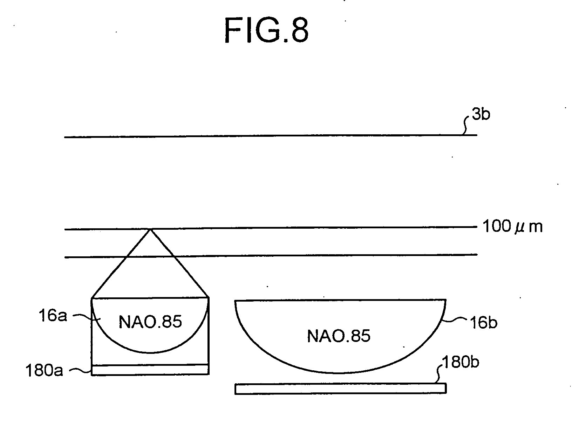

When a Blu-ray disc 3b is inserted in the optical disc drive, the disc determining unit 24 determines the type of the inserted disc, and then outputs to the aberration-correcting-element controlling unit 20 identification information indicating that the Blu-ray disc 3b has been inserted. As shown in Fig. 8, since the cover layer thickness of the Blu-ray disc 3b is 100 micrometers, the aberration-correcting-element controlling unit 20 selects the objective lens 16a corresponding to this cover layer thickness. Then, to correct wavefront aberration for -50 micrometers corresponding to this cover layer thickness, the position of the collimator lens 12a and the voltage applied to the liquid crystal panel 180a or 180b are controlled.

The objective lenses 16a and 16b are varied in design value of the cover layer thickness with a numerical aperture larger than 0.6, and a liquid crystal panel is provided for each of the objective lenses 16a and 16b as a wavefront aberration correcting unit. This makes it possible to achieve an effect of gathering light beams, with wavefront aberration being corrected, on an arbitrary recording layer 4 of the multi-layered optical disc 3a for playing back the information recorded on the recording layer 4. Also, the disc determining unit 24 identifies the multi-layered optical disc 3a and the optical recording medium of the conventionally-existing standards, such as the Blu-ray disc 3b. Therefore, it is possible to play back information recorded not only on the multi-layered optical disc 3a but also on the optical recording medium of the conventionally-existing standards. Furthermore, an optical system shared by an apparatus for playing back the optical recording medium 3 of the conventionally-existing standards, such as the Blu-ray disc 3b, is used to configure the optical recording medium playback apparatus according to the present invention.

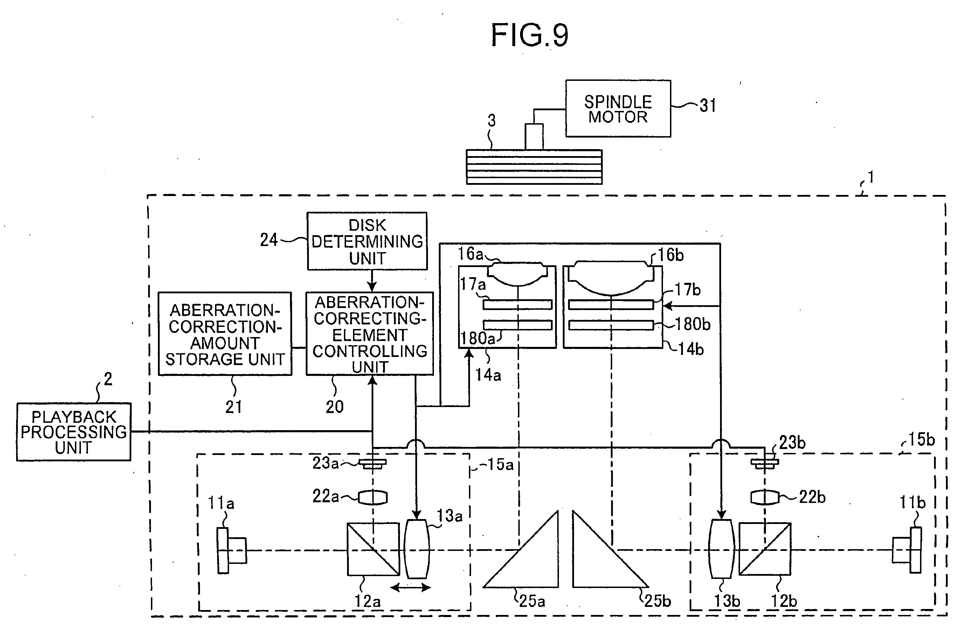

Moreover, the objective lenses 16 varied in design value of the cover layer thickness are switched by a single optical system in accordance with the cover layer thickness of the recording layer 4 of the multi-layered optical disc 3a. Fig. 9 is a schematic of an optical recording medium playback apparatus according to an exemplary modification of the optical recording medium playback apparatus shown in Fig. 6. As shown in Fig. 9, each of the objective lenses 16a and 16b varied in design value of the cover layer thickness may be provided with an optical system. That is, an optical recording medium playback apparatus may be configured such that an objective lens unit 15a is provided with a light source 11 a, a polarized beam splitter 12a, a collimator lens 13a, a light-gathering lens 22a, and a detector 23a, while an objective lens unit 15b is provided with a light source 11 b, a polarized beam splitter 12b, a collimator lens 13b, a light-gathering lens 22b, and a detector 23b.

The objective lenses 16a and 16b do not have to be rotated for switching. Therefore, the objective lens holder 14 is fixed so as not to rotate. Also, the objective lenses 16a and 16b may not be entirely held by the same objective lens holder 14 but, as shown in Fig. 9, each of the objective lenses 16a and 16b may be separately held by objective lens holders 14a and 14b, respectively. Furthermore, the structure in the first embodiment is such that the objective lens unit 15 is held by the objective lens holder 14, and the objective lens holder 14 is supported with respect to the actuator by the shaft passing through a point near the center portion. In this exemplary modification, the structure is such that each of the objective lens holders 14a and 14b is merely movable in a focus direction and in a tracking direction, and therefore is supported by a spring with respect to the actuator.

Another example of the optical recording medium playback apparatus according to the present invention is described below as a second ebmodiment. The optical recording medium playback apparatus according to the second embodiment is configured so that it can play back an optical recording medium with a disc structure including a plurality of recording layers and also an optical recording medium, such as a DVD, from which information is reproduced with a light beam of a wavelength different from that of the former optical recording medium is described. Here, an embodiment of the optical recording medium including the recording layers is a multi-layered optical disc having a shape identical to the Blu-ray disc (BD) and having, for example, 100 recording layers with a wavelength of light beams and a numerical aperture of the object lens that are equal to the wavelength and the numerical aperture used in the Blu-ray disc. Also, it is assumed that optical recording media that can be played back by the optical recording medium playback apparatus are a multi-layered optical disc, a Blu-ray disc, and a DVD.

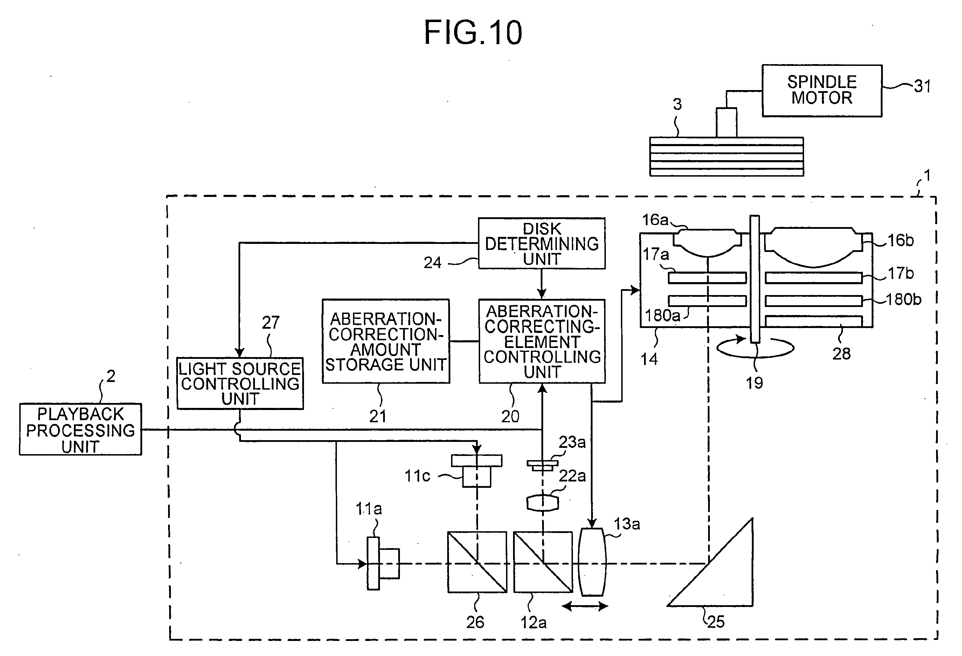

Fig. 10 is a schematic of the optical recording medium playback apparatus according to the second embodiment. This optical recording medium playback apparatus includes, in addition to the components according to the first embodiment shown in Fig. 6, two light sources 11 a and 11c that allow playback of not only the multi-layered optical disc 3a having the recording layers 4 but also a DVD 3c. That is, the first light source 11a, which produces a blue-violet laser beam having a wavelength of 405 nanometer for playback of the multi-layered optical disc 3a and the Blu-ray disc 3b, and the second light source 11b, which produces a red laser beam having a wavelength of 650 nanometer for playback of the DVD 3c, are provided. Also, a light source controlling unit 27 is provided as a light source switching unit that switches the light beams produced from the light sources 11a and 11c depending on identification information obtained by the disc determining unit 24 of the disc inserted in the optical disc drive. Furthermore, a dichroic prism 26 is provided between the light sources 11a and 11c and the beam splitter 12a for letting the red laser light produced by the second light source 11c pass and reflecting the blue-violet laser light produced by the first light source 11a, thereby guiding the laser light to one of optical axes of the collimator lens 13a, the objective lenses 16a and 16b, etc., that are disposed in alignment.

A wavelength-selective aperture limiting unit 28 is further provided on a side of the objective lens 16b facing to the light sources 11a and 11c and having a design value of a cover layer thickness close to the cover layer thickness of the recording layer 4 of the DVD 3c, for allowing a light beam from the first light source 11a and prohibiting, among light beams from the second light source 11c, a light beam passing through a predetermined area away from the optical axis from passing.

The function of this wavelength-selective aperture limiting unit 28 is described next. The numerical aperture of the objective lens 16 is defined by the recording density of the optical recording medium 3. In the second embodiment, the numerical aperture of the objective lens 16 is 0.85 corresponding to the multi-layered optical disc 3a and the Blu-ray disc 3b. However, the DVD 3c has a numerical aperture of 0.6 to 0.65. Therefore, if the numerical aperture of 0.85 of the objective lens 16 remains as it is, a spot is too narrow. Also, if the numerical aperture is large, the objective lens is weak in supporting, for example, a tilt or warpage of the DVD 3c. To get around this, in consideration of the recording and playback wavelength of the DVD 3c of 650 nanometers, which is different from the recording and playback wavelength of the multi-layered optical disc 3a, a wavelength-selective aperture limitation is provided to the objective lens 16b for controlling, based on the wavelength, whether the light beam is allowed to pass. With this configuration, the problem mentioned above is solved by controlling the effective numerical aperture of the DVD 3c.

The operation of the optical recording medium playback apparatus according to the second embodiment is similar to that of the first embodiment when the multi-layered optical disc 3a or the Blu-ray dick 3b is inserted in the optical disc drive. In the optical recording medium playback apparatus according to the second embodiment, however, a light beam produced from the first light source 11a is used.

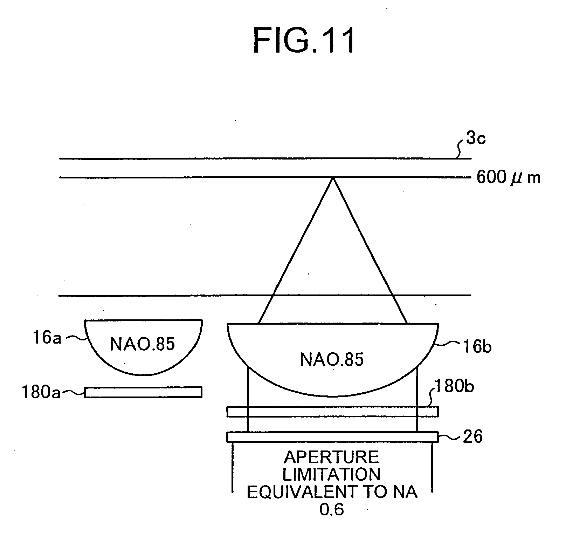

Meanwhile, when the DVD 3c is inserted in the optical disc drive, the disc determining unit 24 determines the type of the inserted disc, and then outputs identification information indicating that a DVD is inserted in the optical disc drive to the light source controlling unit 27 and the aberration-correcting-element controlling unit 20. As shown in Fig. 11, the light source controlling unit 27 performs switching so that a light beam is produced from the second light source 11c for recording and playback of the DVD. Also, since the cover layer thickness of the DVD is 600 micrometers, the aberration-correcting-element controlling unit 20 selects the objective lens 16b corresponding to this cover layer thickness. To perform correction of wavefront aberration from +150 micrometers corresponding to this cover layer thickness, the position of the collimator lens 13a and the voltage applied to the liquid crystal panel 180b are controlled. Furthermore, a light beam is emitted to the relevant recording layer 4 of the DVD that is equivalent to the light beam when the numerical aperture is increased by the wavelength-selective aperture limiting unit 28.

In the optical recording medium playback apparatus according to the second embodiment, the optical recording medium playback apparatus capable of playing back the multi-layered optical disc 3a and the DVD 3c has been described. Alternatively, the optical recording medium playback apparatus may be the one capable of playing back not the DVD 3c but a CD. In this case, the objective lens holder 14 has to be provided with an objective lens unit 15 including an objective lens 16 having a design value of the cover layer thickness equal or close to the cover layer thickness of 1050 micrometers of the recording layer of the CD. Also, as the second light source 11c, a semiconductor laser that produces an infrared laser having a wavelength of 790 nanometers for use in playback of the CD has to be provided. Still further, the optical recording medium playback apparatus may be the one capable of playing back the multi-layered optical disc 3a, the DVD 3c, and the CD.

Furthermore, as shown in Fig. 9, a plurality of objective lenses 16 varied in design value of the cover layer thickness may be provided with an optical system. In this case, only the objective lens 16 for playback of the DVD 3c or the CD has to be provided with the second light source 11c for DVD playback or CD playback in addition to the light sources 11a and 11b for the multi-layered optical disc 3a.

According to the second embodiment, there are a plurality of light sources 11a and 11c that produce light beams varied in wavelength. The wavelength-selective aperture limiting unit 28 is provided on the side of the objective lens 16b facing to the light sources 11a and 11c and has a wavelength different from the wavelength of the light beam for use in playback of the multi-layered optical disc 3a. Therefore, light beams with wavefront aberration being corrected can be gathered on a recording layer of an arbitrary cover layer thickness of the multi-layered optical disc 3a. It is also possible to play back an optical recording medium, such as the DVD 3c or the CD, that is played back with the use of a light beam having a wavelength different from that of the multi-layered optical disc 3a.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An optical pickup apparatus comprising:
a light source (11) that produces and emits light beams on an optical recording medium (3) having a plurality of recording layers;
a plurality of switchable objective lenses (16a, 16b) varied in design value of a cover layer thickness;
a wavefront aberration correcting unit (13, 18) that corrects wavefront aberration occurring when the light beams are gathered in a predetermined range from the design value of the cover layer thickness of one of the objective lenses (16a, 16b);
a detecting unit (23) that detects a light beam reflected from the optical recording medium (3); and
a controlling unit (20) that controls switching of the objective lenses (16a, 16b) in accordance with the cover layer thickness of a selected one of the recording layers and that controls the wavefront aberration correcting unit (13).

2. An optical pickup apparatus comprising:
a plurality of switchable optical systems (15a, 15b) each including
a light source (11a) that produces light beams to be applied to an optical recording medium (3) having a plurality of recording layers;
an objective lens (16a);
a wavefront aberration correcting unit (13a, 18a) that corrects wavefront aberration occurring when the light beams are gathered in a predetermined range from a design value of a cover layer thickness of the objective lens (16a); and
a detecting unit (23a) that detects a light beam reflected from the optical recording medium (3); and
a controlling unit (20) that controls switching of the objective lenses (16a, 16b) of the switchable optical system (15a, 15b) in accordance with the cover layer thickness of a selected one of the recording layers and that controls the wavefront aberration correcting units (13a, 13b) of the switchable optical system (15a, 15b).

3. The optical pickup apparatus according to claim 1 or 2, wherein
the wavefront aberration correcting unit (13, 18, 13a, 18a) includes
a first wavefront aberration correcting unit (13, 13a) configured to include a lens whose relative position with respect to the light source is changed to correct wavefront aberration by changing exitance or convergence of an incident luminous flux of the light beams to the objective lens; and
a second wavefront aberration correcting unit (18, 18a) configured to include an electro-optical element whose index of refraction is changed with an electric field, and an electrode for changing the index of refraction of the electro-optical element to change wavefront aberration of the light beams passing through the objective lens.

4. The optical pickup apparatus according to claim 3, wherein
the second wavefront aberration correcting unit (18, 18a) is disposed for each objective lens, and is disposed integrally with the objective lens.

5. The optical pickup apparatus according to any one of claims 1 to 4, further comprising:
an aberration-correction-amount storage unit (21) that stores a correction amount of the wavefront aberration correcting unit (13, 18, 13a, 18a) for each cover layer thickness of the recording layer, wherein
when the light beams are gathered on the recording layer, the controlling unit (20) corrects the wavefront aberration correcting unit (13, 18, 13a, 18a) based on the correction amount that is stored in the wavefront aberration correcting unit (13, 18, 13a, 18a) corresponding to the cover layer thickness of the recording layer extracted from the aberration-correction-amount storage unit (21).

6. The optical pickup apparatus according to any one of claims 1 to 4, further comprising:
an optical recording medium identifying unit (24) capable of identifying an optical recording medium having recording layers as a first optical recording medium, and an optical recording medium having one recording layer of a predetermined cover layer thickness as a second optical recording medium,
wherein when the optical recording medium identifying unit (24) identifies the second optical recording medium, the controlling unit (20) selects an objective lens having a design value of the cover layer thickness close to the predetermined cover layer thickness of the second optical recording medium.

7. The optical pickup apparatus according to claim 6, wherein the light source (11) includes
a first light source (11a) that produces light beams to be irradiated onto the first optical recording medium; and
a second light source (11c) that produces light beams to be irradiated onto the second optical recording medium,
wherein the optical pickup apparatus further comprises a light source switching unit (27) that performs switching of the first light source (11a) and the second light source (11c) in accordance with a type of the optical recording medium identified by the optical recording medium identifying unit (24).

8. An optical recording medium playback apparatus comprising:
the optical pickup apparatus (1) according to any one of claims 1 to 7; and
a playback processing unit (2) that reproduces a detection signal output from the detecting unit (23, 23a) of the optical pickup apparatus (1).
